# EUROPEAN PATENT APPLICATION

(11) **EP 0 529 188 A1**
(43) Date of publication of application: **03.03.1993**
(21) Application number: 92104349.3
(22) Date of filing: 13.03.1992
(51) Int. Cl.: B60B 33/00, B62K 5/02

(54) **Motor vehicle**

(30) Priority: 28.08.1991 JP 242822/91
(71) Applicant: NAMCO, LTD., Ohta-Ku Tokyo 146 (JP)
(72) Inventor: Ishikawa, Hirotomo, c/o NAMCO Ltd., Tokyo 146 (JP)
(74) Representative: Hoeger, Stellrecht & Partner

(57) **Abstract**

A motor vehicle adapted to be driven by its own power source and steered by an operator, having a chassis (3) equipped with an operator seat (8), front wheel (1) and a pair of rear wheels (2) mounted respectively on a lower surface of the chassis (3), a motor (7) for driving the front wheel (1), and a caster (9) provided between the chassis (3) and each of the rear wheels (2). The caster (9) supports the rear wheels (2) turnably around an axis (L) extending in a direction intersecting a shaft (W) of the rear wheels (2). Instead of using the caster (9), A sphere member (22) being rotatable with respect to the chassis (3) can be used as the rear wheel (2).

## Description

### BACKGROUND OF THE INVENTION

### 1. Field of the Invention

The present invention relates to a motor vehicle adapted to be driven by its own power source and maneuvered by an operator and, particularly, to such motor vehicle capable of performing a skid movement at low speed.

### 2. Related Art

Such motor vehicle of this type is usually used in playground, etc., and, when front wheels thereof are maneuvered by a player in either direction, rear wheels thereof skid even at low speed, giving a simulation of a high speed running of a vehicle to the player.

In order to realize such skid motion of rear wheel at low speed, there are two schemes, in one of which a road surface is formed of a material whose friction resistance is low and in the other of which liquid such as water is sprayed onto a road surface to make it slippery. These schemes, however, are expensive. Because the slippery surface is indispensable to the road in the above schemes, it is impossible for the motor vehicle to move at anywhere desired.

### SUMMARY OF THE INVENTION

An object of the present invention is to provide a motor vehicle capable of providing a skid motion even at low speed which is inexpensive and can be used in any place.

In order to achieve the above object, according to the present invention, a motor vehicle adapted to be driven by its own power source and maneuvered by a player comprises a chassis on which the player rides, front and rear wheels provided on a lower surface of the chassis, front wheel drive means such as electric motor and casters provided between the rear wheels and the chassis, respectively. Each caster supports an associated one of the rear wheels rotatably around an axis extending in a direction such that this axis intersects a horizontal plane and in particular axis of the rear wheel.

Instead of use of such caster, the rear wheels may be constituted with spheres freely rotatable with respect to the chassis.

With this construction in which the rear wheels are supported by the casters or are constituted by the spheres, it is possible to realize a skid movement of rear wheels even at low vehicle speed by steering front wheels in either direction. Since there is no need of making road surface slippery by means of any special means, the vehicle according to the present invention can be used in any place easily. Further, since there is no need of maintenance of slippery road surface, it is economically advantageous.

### BRIEF DESCRIPTION OF THE DRAWINGS

Fig. 1 is a perspective view showing an embodiment of a motor vehicle according to the present invention;
Fig. 2 is a side view of rear wheels of the motor vehicle in Fig.1 when looked in a direction shown by an arrow II in Fig. 1;
Fig. 3 is a side view showing the vehicle with the rear wheels being slanted with respect to the chassis;
Fig. 4 is a side view showing another embodiment of the rear wheels;
Fig. 5 illustrates a forward movement of the vehicle; and
Fig. 6 illustrates a skid movement thereof.

### DETAILED DESCRIPTION OF THE PREFERRED EMBODIMENTS

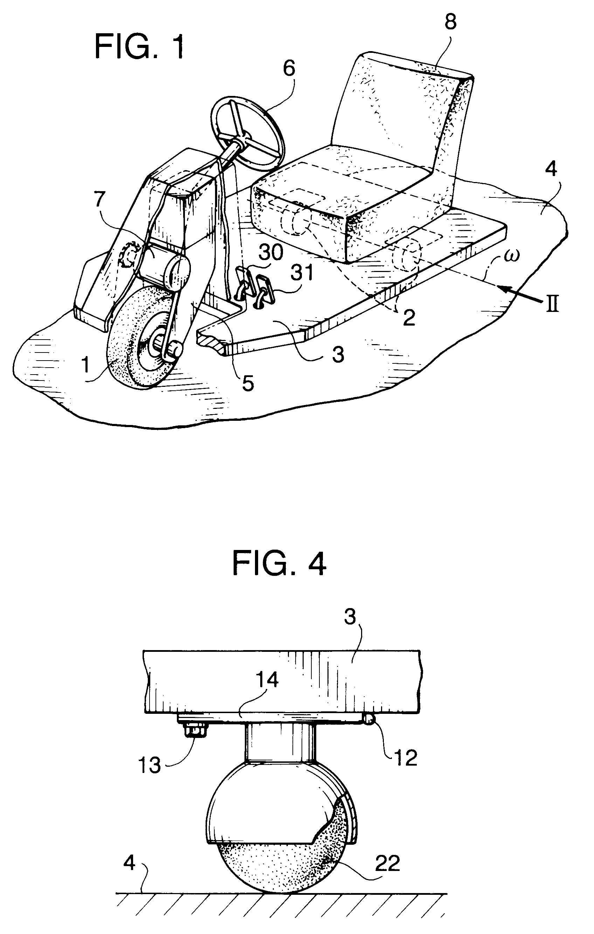

Fig. 1 shows an example of a motor vehicle as a whole. The motor vehicle includes a single front wheel 1 and a pair of rear wheels 2 by all of which a chassis 3 of the motor vehicle is supported. The front wheel 1 is connected through a steering mechanism 5 to a steering handle 6. The front wheel 1 is adapted to be driven by an electric motor 7. A reference numeral 8 depicts a steering seat for an operator. In a position of the chassis 3 below the steering handle 6 is equipped with an acceleration pedal 30 and a brake pedal 31. When the acceleration pedal 30 is depressed, the motor 7 is energized whose rotation speed is proportional to an amount of depression of the acceleration pedal 30. When the brake pedal 31 is depressed, the front wheel 1 as well as the rear wheels 2 are braked.

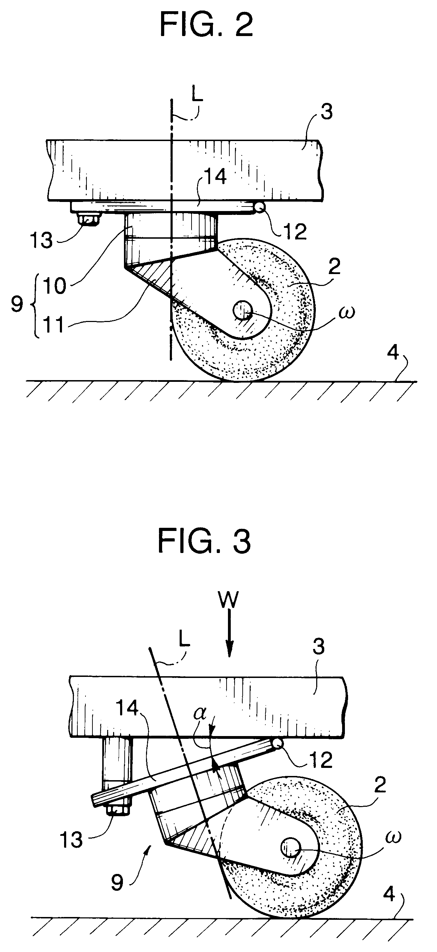

Fig. 2 is a side view of the rear wheels 2 when looked at in a direction shown by an arrow II in Fig. 1. As shown, each of the rear wheels 2 is mounted to a lower surface of the chassis 3 through a caster 9. The caster 9 is composed of a bearing 10 and a support frame 11. The bearing 10 is fixedly mounted to a lower surface of a slantable plate 14 in the form of a flat plate and the slantable plate 14 is rotatably supported at its rear end by the chassis 3 through a rotation shaft 12 and fixedly secured at its front end portion to the chassis 3 by means of a bolt 13. The rear wheel 2 is supported by the support frame 11 rotatably around a wheel shaft ω thereof which is the center line of the rear wheels 2 extending in parallel with the chassis 3. With the use of the bearing 10, the support frame 11 and hence the rear wheel 2 can rotate around a center axis L of the bearing 10. The center axis L of the bearing 10 extends at an angle with respect to the rear wheel shaft (ω) which angle, in the shown case, is a right angle.

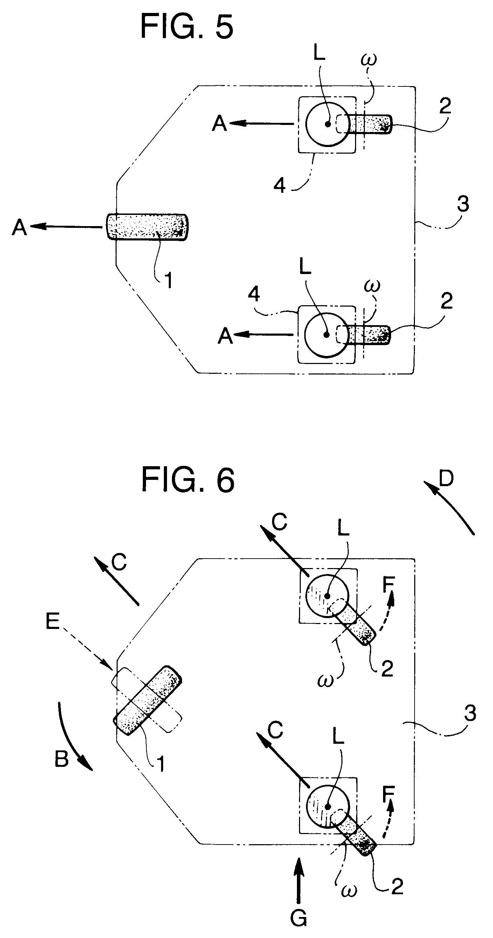

Since the motor vehicle according to this embodiment is constructed as mentioned above, when the acceleration pedal 30 is depressed with the front wheel 1 being directed forwardly, the motor 7 is energized to drive the front wheel 1. Therefore, the chassis 3 moves straight as shown by an arrow A in Fig.5. At this time, the rear wheels 2 are positioned in parallel with the front wheel 1.

When the operator steers the steering handle 6 leftwardly, for example, the front wheel 1 is turned leftwardly as shown by an arrow B in Fig. 6. Therefore, the chassis 3 is turned leftwardly. In this case, a moment of inertia is applied to the chassis 3 in a direction normal to the moving direction of the vehicle, as shown by an arrow G. With this inertia, the rear wheels 2 are turned clockwise direction around the center axis L of the bearing 10 and then moved in a direction shown by an arrow C, resulting in a relatively large lateral movement of a rear portion of the chassis 3 in a direction shown by an arrow D. This movement of the chassis 3 due to inertia simulates a skid movement of rear wheels of a motor vehicle. That is, the operator can experience a rear wheel skid similar to that which would occur when a steering handle of a motor vehicle of the normal type is turned sharply while running at high speed.

Thereafter, when the steering handle 6 is steered in reverse direction to orient the front wheel 1 as shown by a dotted line E in Fig. 6, the chassis 3 moves rightwardly as shown by the arrow C. Then, by gradually turning the front wheel 1 to the forward direction as shown in fig. 5 by steering the steering handle 6, the rear wheels 2 are also turned gradually to the forward direction, and then, the chassis 3 restores its original straight forward heading shown in Fig. 5. In restoring the original straight forward heading, when the operator depresses the acceleration pedal 30 deeply to drive the motor 7 with an increased power so that the front wheel 1 can drive the chassis 3 with larger traction power, it is possible to restore the heading of the rear wheels 2 within short time. That is, it is possible to turn the chassis 3 with minimum skid. On the other hand, when the amount of depression of the acceleration pedal 30 is so little that the driving force of the front wheel 1 is small, the chassis 3 may restore its original heading after a large skid. The degree of skid depends upon the acceleration of the front wheel 1, that is, the amount of depression of the acceleration pedal 30 and how much the steering handle 6 is turned.

In Fig. 2, the slantable plate 14 to which the rear wheel 2 is mounted is rotatable around the shaft member 12 and, as shown in Fig. 3, it is possible to incline the slantable plate 14 by an angle α with respect to the chassis 3. In such case, the swivel axis L of the rear wheel 2 is changed from the vertical one shown in Fig. 2 to an inclined one shown in Fig. 3. In Fig. 3, since the chassis 3 is loaded with its own weight W, the rear wheel 2 is always subjected to a turning force (dotted line F in Fig. 6) causing the rear wheel 2 to restore its original straight forward heading. Therefore, with the slantable plate 14 inclined, the restoring of heading of the chassis 3 after being skidded becomes easier. In this case, it is possible to regulate the amount of restoring force F by regulating the inclination angle α.

Fig. 4 shows another embodiment of the rear wheel. Contrary to the embodiment shown in Fig. 2 in which the rear wheels 2 are tyred wheels having shafts ω, each rear wheel has the form of a sphere 22 which is rotatable in any direction. In this case, there is no need of providing bearing means between the chassis 3 and the rear wheels 22.

Although the motor vehicle shown in Fig. 1 has the single front wheel 1, it is possible to use a pair of front wheels as usual. In such case, since the stability of the chassis 3 during a skid movement thereof is higher than in the case shown in Fig. 1, it is possible to experience a skid movement without risk of rolling of the chassis 3 even if the steering handle 6 is steered very sharply.

Although the present invention has been described with reference to the preferred embodiments, it is not limited thereto and modification or changes thereof can be done easily within the appended claims.

In accordance with a preferred feature of this invention the swivel axis L is arranged such that it intersects a horizontal plane in front of the axis ω of the associated wheel.

According to a further preferred feature of this invention the caster can be tilted relative to the chassis about an axis being parallel to the chassis and located behind the swivel axis L.

## Claims

1. A motor vehicle adapted to be driven by its own power source and steered by an operator, comprising;
a chassis(3) having an operator seat(8);
front wheel means(1) and a pair of rear wheel means(2) mounted on a lower surface of said chassis(3);
driving means(7) for driving said front wheel means(1); and
a caster(9) provided between said chassis(3) and each of said rear wheel means(2), said caster(9) supporting said rear wheel means(2) turnably around an axis(L) which intersects a plane defined by a shaft (ω) of said rear wheel means (2) and being parallel to said chassis (3).

2. The motor vehicle claimed in claim 1, wherein said caster(9) includes a bearing(10) fixed to said lower surface of said chassis(3) and a support frame(11) for supporting each said rear wheel means(2) and said support frame(11) is turnably connected to said bearing(10).

3. The motor vehicle claimed in claim 1, wherein said caster(9) is mounted in a slanted relation to said chassis(3).

4. The motor vehicle claimed in claim 1, further comprising shaft members(12) each provided on the lower surface of said chassis(3) and a slantable plate(14) supported by said shaft member(12) at a regulatable angle(α) with respect to said lower surface of said chassis(3), and wherein said caster(3) is fixedly mounted on said slantable plate(14) so that said caster(9) is mounted on said lower surface of said chassis(3) at the regulatable angle(α) with respect thereto.

5. The motor vehicle claimed in claim 1, further comprising an acceleration pedal(30) provided on said chassis(3) to increase or decrease a driving force of said front wheel means(1).

6. The motor vehicle claimed in claim 1, wherein said front wheel means(1) comprises a single wheel.

7. The motor vehicle claimed in claim 1, wherein said front wheel means(1) comprises a pair of wheels arranged in parallel with a moving direction of said chassis(3).

8. A motor vehicle adapted to be driven by its own power source and steered by an operator, comprising:
a chassis(3) having an operator seat(8);
front wheel means(1) and a pair of rear wheel means(2) mounted on a lower surface of said chassis(3); and
driving means(7) for driving said front wheel means(1);
each said rear wheel means(2) comprising a sphere member(22) rotatable with respect to said chassis(3).

9. The motor vehicle claimed in claim 8, further comprising, for each of said rear wheel means(2), a shaft member(12) provided on the lower surface of said chassis(3) and a slantable plate(14) supported by said shaft member(12) at a regulatable angle(α) with respect to said lower surface of said chassis(3), and wherein said sphere member(22) is fixedly mounted on said slantable plate(14) so that said sphere member(22) is mounted on said lower surface of said chassis(3) at the regulatable angle(α) with respect thereto.

10. The motor vehicle claimed in claim 8, further comprising an acceleration pedal(30) provided on said chassis(3) to increase or decrease a driving force of said front wheel means(1).

11. The motor vehicle claimed in claim 8, wherein said front wheel means(1) comprises a single wheel.

12. The motor vehicle claimed in claim 8, wherein said front wheel means(1) comprises a pair of wheels arranged in parallel with a moving direction of said chassis(3).
